# DEMANDE DE BREVET EUROPEEN

(11) **EP 4 356 729 A1**
(43) Date de publication de la demande: **24.04.2024**
(21) Numéro de dépôt: 23202232.7
(22) Date de dépôt: 06.10.2023
(51) Int. Cl.: A01M 7/00

(54) **PROCÉDÉ DE CALIBRAGE D'UN PULVÉRISATEUR AGRICOLE**

(30) Priorité: 19.10.2022 FR 2210784
(71) Demandeur: Exel Industries, 51200 Epernay (FR)
(72) Inventeur: HEMMERLE, Matthieu, 51200 EPERNAY (FR); DIAS, Jérôme, 69004 LYON (FR)
(74) Mandataire: Argyma

(57) **Abrégé**

La présente invention vise un procédé de calibrage d'un engin agricole de pulvérisation (100) comprenant une pluralité de buses de pulvérisation (120) aménagées sur la rampe de pulvérisation (150), au moins un capteur optique (130) et un système de commande, chaque capteur optique dudit (130) ayant un champ de vision (131) comprenant des secteurs (132), chacun des secteurs (132) étant associé à une buse de pulvérisation (120), le système de commande (140) étant configuré pour commander la pluralité de buses de pulvérisation (120) en fonction d'images acquises par les capteurs optiques (130), le procédé de calibrage (200) comprenant, pour un capteur optique (130), une association (230) automatique mise en oeuvre par le système de commande (140) de chaque secteur (132) du champ de vision (131) du capteur optique (130) correspondant à une buse de pulvérisation de la pluralité de buses de pulvérisation (120).

## Description

### DOMAINE TECHNIQUE

La présente invention concerne le domaine des engins agricoles de pulvérisation, notamment pour pulvériser un produit phytosanitaire de façon localisée sur des cultures. En particulier, la présente invention se rapporte au domaine du calibrage de tels engins agricoles de pulvérisation.

### ETAT DE LA TECHNIQUE

L'objectif de la pulvérisation agricole de produits vise à optimiser la pousse de cultures, par exemple en favorisant la croissance grâce à l'apport de nutriments, en protégeant les cultures de maladies, de parasites, ou encore en limitant la propagation de végétaux « nuisibles », autrement dit des mauvaises herbes. Une tendance actuelle dans le domaine de la pulvérisation agricole est de développer des techniques de pulvérisation ciblée, de sorte que le produit puisse être pulvérisé uniquement dans les zones qui le nécessitent. Ceci permet, d'une part, d'éviter le gaspillage de produit, et d'autre part, de limiter la pollution des sols et de l'atmosphère environnante.

De manière générale, un engin agricole de pulvérisation comprend une rampe de pulvérisation supportant une pluralité de buses de pulvérisation configurées pour projeter un liquide phytosanitaire afin de traiter les cultures. Une cuve de l'engin agricole de pulvérisation alimente les buses de pulvérisation par l'intermédiaire d'un circuit hydraulique comprenant au moins une pompe, et un ensemble de vannes. Le contrôle des vannes, ou d'autres moyens de réglage de la circulation du liquide phytosanitaire, permet d'activer, de désactiver et de régler la projection du liquide à travers les buses de pulvérisation, de sorte à réaliser de la pulvérisation localisée.

De plus, l'engin agricole de pulvérisation peut comprendre un système de commande adapté pour commander les buses de pulvérisation à partir de données en temps réel de la zone à traiter, par exemple des données sur la répartition, l'étendue, et la hauteur des végétaux à traiter.

Plus précisément, des caméras aménagées sur l'engin agricole, par exemple installées le long de la rampe de pulvérisation, peuvent acquérir des images de la zone à traiter. Pour cela, le champ de vision des caméras doit au moins recouvrir le champ de pulvérisation potentiel des buses. Alors, le système de commande pourra adapter en temps réel différents paramètres de pulvérisation, tel que le débit, le type de jets, ou encore la hauteur de pulvérisation, à partir du traitement des images acquises par les caméras. A titre d'exemple, le document FR3093620A1 décrit un tel engin agricole de pulvérisation.

De plus, un tel engin agricole de pulvérisation nécessite d'être calibré précisément afin que la commande de la pulvérisation soit en retour suffisamment précise et réactive. Plus précisément, on entend par le terme calibrage la mise en relation entre le champ visuel des caméras et le champ d'application du produit par les buses de pulvérisation. Dans l'état de la technique, ce calibrage est réalisé manuellement en usine, et donc généralement de manière statique et en intérieur dans un espace limité. Il existe donc un besoin de simplifier le calibrage de l'engin agricole de pulvérisation.

Dans ce but, la présente invention propose un procédé de calibrage, qui soit plus simple et plus rapide à mettre en oeuvre, en particulier en offrant la possibilité d'automatiser au moins certaines étapes du procédé de calibrage de l'engin agricole de pulvérisation.

### PRESENTATION DE L'INVENTION

Plus précisément, à cette fin, l'invention a pour objet un procédé de calibrage d'un engin agricole de pulvérisation comprenant un système de pulvérisation comprenant une rampe de pulvérisation, une pluralité de buses de pulvérisation aménagées sur la rampe de pulvérisation, au moins un capteur optique et un système de commande, chaque capteur optique ayant un champ de vision comprenant des secteurs formant une grille, chacune des cellules de la grille de chacun des secteurs étant associée à une buse de pulvérisation de la pluralité de buses de pulvérisation, chacune des buses de pulvérisation pouvant être associée à une ou plusieurs cellule de la grille, le système de commande étant configuré pour traiter des images acquises du champ de vision dudit au moins un capteur optique et pour commander la pluralité de buses de pulvérisation en fonction desdites images, le procédé de calibrage comprenant, pour un capteur optique dudit au moins un capteur optique, une association automatique mise en oeuvre par le système de commande de chaque secteur du champ de vision du capteur optique correspondant à une buse de pulvérisation de la pluralité de buses de pulvérisation.

Avantageusement, pour chaque capteur optique dudit au moins un capteur optique, l'exécution des étapes successives suivantes :
la mise en place d'un système de référence au sol dans le champ de vision du capteur optique correspondant, le système de référence présentant une pluralité de motifs, chacun des motifs étant associé à une buse de pulvérisation de ladite pluralité de buses de pulvérisation et correspondant à une position déportée de la buse de pulvérisation correspondante ;
l'acquisition par le capteur optique correspondant d'une image dudit champ de vision intégrant ladite pluralité de motifs ;
l'association automatique mise en oeuvre par le système de commande comprenant la détection de ladite pluralité de motifs sur ladite image, suivie de l'association de chacun des secteurs du champ de vision à une buse de pulvérisation de ladite pluralité de buses de pulvérisation lorsque le secteur correspondant intègre au moins partiellement le motif associé à la buse de pulvérisation correspondante.

Avantageusement, le système de référence étant un système physique, notamment une bâche, la mise en place du système de référence comprend la mise en place du système physique à une distance donnée de la rampe de pulvérisation par un opérateur.

Selon un mode de réalisation, le système physique est une bâche, et l'association automatique mise en oeuvre par le système de commande pour le capteur optique correspondant, comprend la détection du contour de la bâche au préalable de la détection de ladite pluralité de motifs du système de référence sur ladite image du champ de vision du capteur optique correspondant.

Notamment, l'engin agricole de pulvérisation peut comprendre au moins une source lumineuse ; dans ce cas, la mise en place du système de référence peut comprendre la projection de la pluralité de motifs par ladite au moins une source lumineuse sur le sol, ladite pluralité de motifs correspondant à des motifs lumineux.

Selon un mode de réalisation, la projection de la pluralité de motifs par ladite au moins une source lumineuse sur le sol comprend la projection de motifs lumineux de type linéaire.

Avantageusement, le procédé de calibrage peut être exécuté pour chacun des capteurs optiques d'une pluralité de capteurs optiques.

Avantageusement, le procédé de calibrage peut être exécuté pour uniquement un capteur optique de la pluralité de capteurs optiques, notamment à la suite d'une identification d'un mauvais réglage associé au capteur optique correspondant.

Selon un mode de réalisation, le procédé de calibrage comprend l'identification automatique par le système de commande d'un mauvais réglage associé à un capteur optique de la pluralité de capteurs optiques, au préalable de l'association automatique mise en oeuvre par le système de commande pour le capteur optique correspondant.

Le procédé de calibrage selon l'invention peut comprendre la vérification du recouvrement de champs de vision de deux capteurs optiques consécutifs de la pluralité de capteurs optiques, au préalable de l'association automatique mise en oeuvre par le système de commande pour le capteur optique correspondant.

Selon un mode de réalisation, un motif associé à une buse de pulvérisation s'étend au moins en partie dans le champ de vision d'au moins deux capteurs optiques adjacents. Cela permet de détecter un éventuel mauvais réglage d'un capteur optique.

La présente invention vise aussi un engin agricole de pulvérisation comprenant un système de pulvérisation comprenant une rampe de pulvérisation, une pluralité de buses de pulvérisation aménagées sur la rampe de pulvérisation, au moins un capteur optique, et un système de commande, chaque capteur optique dudit au moins un capteur optique ayant un champ de vision comprenant des secteurs formant une grille, chacune des cellules de la grille de chacun des secteurs étant associée à une buse de pulvérisation de la pluralité de buses de pulvérisation, chacune des buses de pulvérisation pouvant être associée à une ou plusieurs cellule de la grille, le système de commande étant configuré pour traiter des images acquises du champ de vision dudit au moins un capteur optique et pour commander la pluralité de buses de pulvérisation en fonction desdites images, le système de commande étant configuré pour réaliser, pour un capteur optique dudit au moins un capteur optique, une association automatique entre chaque secteur du champ de vision du capteur optique correspondant et une buse de pulvérisation de la pluralité de buses de pulvérisation.

Un tel engin agricole de pulvérisation peut comprendre au moins une source lumineuse configurée pour projeter au sol des motifs lumineux.

Selon un mode de réalisation, un tel engin agricole de pulvérisation présente une source lumineuse comprenant un dispositif de concentration configuré pour focaliser la lumière émise par la source lumineuse.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
la figure 1 est une représentation schématique d'une vue de dessus d'un exemple d'engin agricole de pulvérisation selon un mode de réalisation de l'invention ;
la figure 2 est une représentation schématique d'une vue latérale d'un système de pulvérisation selon un mode de réalisation de l'invention ;
la figure 3 est une représentation schématique d'une vue de dessus du système de pulvérisation selon un mode de réalisation de l'invention ;
la figure 4 est une représentation schématique du procédé de calibrage de l'engin agricole de pulvérisation selon un mode de réalisation de l'invention.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

Selon un aspect de l'invention, l'invention concerne un engin agricole de pulvérisation, notamment un pulvérisateur configuré pour épandre un produit, par exemple un liquide phytosanitaire, en plein champ. L'invention se rapporte aussi à un procédé de calibrage de l'engin agricole de pulvérisation selon cet aspect de l'invention.

En particulier, l'engin agricole de pulvérisation selon l'invention est configuré pour épandre un produit de manière localisée sur des cultures, afin d'optimiser la pousse desdites cultures, par exemple en en favorisant la croissance grâce à l'apport de nutriments, en les protégeant de maladies, de parasites, ou encore en limitant la propagation de végétaux « nuisibles », autrement dit des mauvaises herbes. L'engin agricole peut être un véhicule automoteur ou tracté. De plus, l'engin agricole de pulvérisation peut être autonome, c'est-à-dire piloté à distance, ou comprendre une cabine recevant un utilisateur pour conduire l'engin.

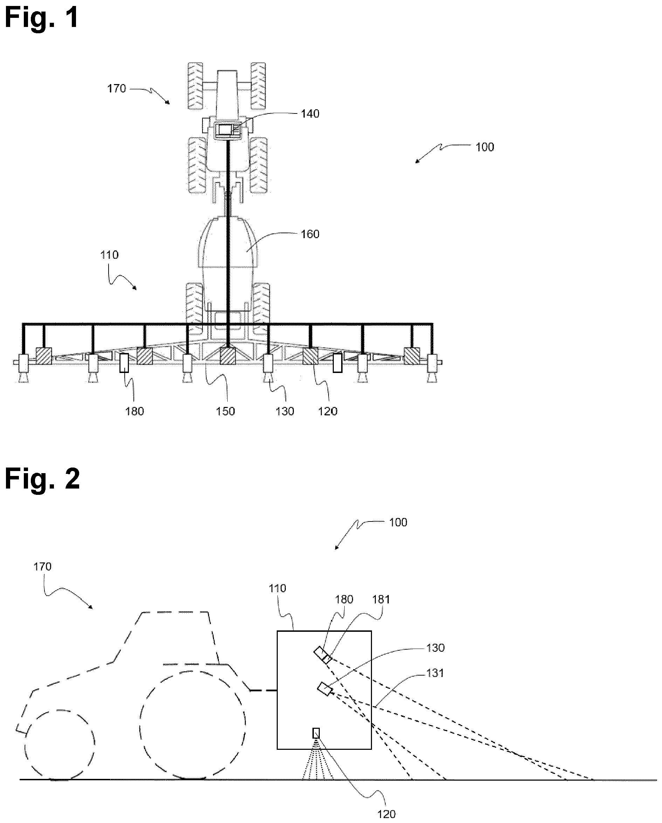

Les figures 1 et 2 illustrent schématiquement l'engin agricole de pulvérisation 100 selon l'invention, respectivement selon une vue de haut et une vue latérale de l'engin agricole de pulvérisation 100. L'engin agricole de pulvérisation 100 comprend un système de pulvérisation 110 comprenant une rampe de pulvérisation 150, et une pluralité de buses de pulvérisation 120 aménagées sur la rampe de pulvérisation 150. La rampe de pulvérisation 150 peut présenter une largeur de plusieurs mètres à quelques dizaines de mètres.

Les buses de pulvérisation 120 peuvent être arrangées individuellement, ou regroupées en des ensembles, par exemple de deux à quatre buses, dits ensembles multi-buses. Les ensembles multi-buses peuvent être commandés individuellement ou en groupe. L'utilisation d'ensembles multi-buses permet d'affiner l'adaptation de la pulvérisation aux cultures à traiter. De plus, les buses de pulvérisation 120, ou le cas échéant, les ensembles multi-buses, peuvent être disposées de manière substantiellement régulière le long de la rampe de pulvérisation, par exemple tous les 20cm à 30cm.

L'engin agricole de pulvérisation 100 peut comprendre en particulier un tracteur 170 configuré pour tracter le système de pulvérisation 110. Alors, la rampe de pulvérisation 150 est de préférence positionnée à l'arrière du tracteur 170, mais peut alternativement être positionné à l'avant du tracteur 170, si cela est approprié. Les termes arrière et avant sont définis ici par rapport à la direction d'avance du tracteur 170.

Une cuve 160 de l'engin agricole de pulvérisation 100 peut notamment alimenter les buses de pulvérisation 120 en produit par l'intermédiaire d'un circuit hydraulique comprenant au moins une pompe, et un ensemble de vannes. Des vannes, par exemple à air comprimé ou électriques, peuvent être aménagées au niveau des buses de pulvérisation 120. Le contrôle des vannes permet l'activation, la désactivation, et le réglage de la projection du liquide à travers les buses de pulvérisation, de sorte à réaliser de la pulvérisation localisée.

L'engin agricole de pulvérisation 100 selon l'invention comprend aussi au moins un capteur optique 130, de préférence une pluralité de capteurs optiques, et un système de commande 140 configuré pour traiter des images acquises par ledit au moins un capteur optique 130 et pour commander les buses de pulvérisation 120 en fonction desdites images acquises par ledit au moins un capteur optique 130. En particulier, les images acquises par un capteur optique 130 peuvent être utilisées pour commander les buses de pulvérisation, ou le cas échéant, les ensembles multi-buses tel que précédemment décrits.

Les capteurs optiques 130 pourront réaliser une acquisition en temps réel d'images recouvrant le champ de pulvérisation potentiel des buses de pulvérisation, en amont des buses, de sorte à permettre l'analyse en temps réel de la parcelle à traiter avant d'entamer la pulvérisation. Autrement dit, lesdites images correspondent à une acquisition à un instant donné du champ de vision 131 des capteurs optiques 130. Ensuite, ces images pourront être transmises au système de commande 140, notamment par l'intermédiaire d'un réseau de communication. Le système de commande 140 pourra traiter lesdites images de sorte à en extraire par exemple des données sur la répartition, l'étendue, et la hauteur des végétaux à traiter. Alors, le système de commande pourra adapter en temps réel différents paramètres de pulvérisation, tel que les buses de pulvérisation à activer (c'est-à-dire les buses de pulvérisation à commander en ouverture ou en fermeture, les autres buses de pulvérisation pouvant maintenir leur état actuel), le débit de pulvérisation, la durée de pulvérisation, le type de jets à projeter, ou encore la hauteur de pulvérisation, en fonction des images acquises par les capteurs optiques. Ainsi, le système de commande permet de pulvériser de manière sélective de sorte à cibler des zones particulières à traiter, et d'adapter les paramètres de pulvérisation en fonction des caractéristiques des végétaux de ces zones à traiter.

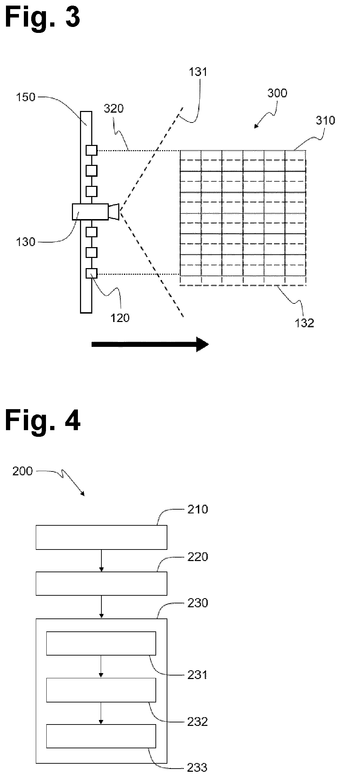

La figure 3 représente schématiquement une vue de dessus du système de pulvérisation tel que précédemment décrit, focalisé uniquement sur une portion de la rampe de pulvérisation 150 autour d'un capteur optique 130 par souci de simplification. Le champ de vision 131 du capteur optique 130 correspondant est représenté par des lignes en tirets. On peut noter que le champ de vision 131 du capteur optique 130 peut être plus large que la zone de pulvérisation couverte par les buses de pulvérisation 120 associées à ce capteur optique 130. Ainsi, il est possible d'avoir une zone de recouvrement latérale entre les champs de vision de capteurs optiques adjacents.

De plus, le champ de vision 131 du capteur optique 130 comprend des s 132. Chacun des secteurs 132 est associé à l'une des buses de pulvérisation 120, ou le cas échéant à un ensemble multi-buses. De plus, chacune des buses de pulvérisation 120, ou le cas échéant à un ensemble multi-buses, peut être associée à plusieurs secteurs 132 du champ de vision 131 du capteur optique 130 correspondant. Les secteurs 132 peuvent, de manière préférée, former une grille (représentée par des tirets sur la figure 3), chacune des cellules de la grille étant associée à l'une des buses de pulvérisation 120 (ou le cas échéant à un ensemble multi-buses) associées au capteur optique 130 correspondant. Chacune des buses de pulvérisation 120 peut être associée à une ou à plusieurs cellules de la grille. Alors, lorsque le système de commande 140 détecte sur l'un des secteurs 132 la nécessité de pulvériser du produit, le système de commande contrôle la buse de pulvérisation 120 correspondante à ce secteur 132 afin de pulvériser du produit sur la zone de la parcelle à traiter correspondant à ce secteur 132.

En outre, d'une part, le système de commande 140 peut comprendre une première unité de commande configurée pour assurer le traitement des images fournies par les capteurs optiques 130. Dans ce but, la première unité de commande peut être configurée pour mettre en oeuvre des algorithmes de traitement d'images. De plus, la première unité de commande peut également être configurée pour adapter des paramètres des capteurs optiques, à savoir par exemple le temps de pose et le gain d'amplification, notamment en fonction de l'exposition, afin d'améliorer la qualité des images acquises.

D'autre part, le système de commande 140 peut comprendre une deuxième unité de de commande configurée pour commander les buses de pulvérisation 120. En particulier, la deuxième unité de commande peut commander sélectivement des buses de pulvérisation en ouverture, lorsqu'un traitement est nécessaire sur un secteur donné, et en fermeture lorsque ladite zone est passée.

Les capteurs optiques 130 peuvent notamment être des caméras DBC (pour Dual Band Captor) ou des caméras spectrales.

Les capteurs optiques 130 sont notamment aménagés sur l'engin agricole de pulvérisation 100, en particulier sur la rampe de pulvérisation 150. Les capteurs optiques 130 peuvent être installés de manière substantiellement régulière le long de la rampe de pulvérisation 150, en s'assurant que les champs de vision 131 de capteurs optiques 130 adjacents présentent une zone de recouvrement, ou du moins sont contiguës.

De plus, les capteurs optiques 130 peuvent aussi être installés à l'avant de l'engin agricole de pulvérisation. Alternativement, une partie des capteurs optiques 130 peuvent être aménagés sur la rampe de pulvérisation 150, et une autre partie des capteurs optiques 130 peuvent être aménagés à l'avant de l'engin agricole de pulvérisation 100, par exemple sur le tracteur 170. Aménager une partie des capteurs optiques 130 à l'avant de l'engin agricole de pulvérisation 100 permet avantageusement de répondre à la problématique de la présence du tracteur qui constitue un obstacle au champ visuel recherché de la parcelle à traiter.

Le choix du nombre de capteurs optiques 130 utilisés peut reposer sur un compromis entre la portée des capteurs optiques et la précision des images acquises. Les capteurs optiques peuvent notamment être constitués de caméras dites basse densité, par exemple approximativement positionnées tous les trois mètres le long de la rampe de pulvérisation, ou encore de caméras dites haute densité, par exemple approximativement positionnées tous les mètres le long de la rampe de pulvérisation. Il également possible d'utiliser une combinaison de caméras basse densité, et de caméras haute densité.

Il est important de noter que les capteurs optiques sont avantageusement disposés de manière substantiellement régulière le long de la rampe de pulvérisation. Néanmoins, les capteurs optiques présentent généralement une variation de positionnement entre eux. Ceci est dû en partie à des incertitudes de positionnement souvent présentes, en particulier à cause des incertitudes mécaniques de positionnement de la rampe de pulvérisation, en particulier la flèche et les déviations angulaires de la rampe de pulvérisation. A cela s'ajoute, lors d'un repliage potentiel de la rampe de pulvérisation, la gestion de l'encombrement généré par les capteurs optiques. En effet, il ne faudrait pas que les capteurs optiques gênent le repliage de la rampe de pulvérisation. Ainsi, les capteurs optiques sont généralement positionnés avec un écart variable entre des capteurs optiques adjacents. Cette variabilité induit la nécessité de réaliser un calibrage individuel de chacun des capteurs optiques. Il est par conséquent important de réaliser un calibrage rapide et précis, comme le permet la présente invention.

En outre, en référence à la figure 2, l'engin agricole de pulvérisation 100 peut également comprendre au moins une source lumineuse 180, de préférence une pluralité de sources lumineuses, afin d'éclairer la parcelle à traiter, notamment de nuit mais également de jour lorsque la luminosité est faible. En effet, les ombres réduisent la qualité des images acquises, ce qui entraîne une conséquence sur la performance du procédé de pulvérisation. Ainsi, un éclairage adéquat de la parcelle à traiter permet d'améliorer la qualité des images acquises par les capteurs optiques, ce qui facilite ensuite le traitement des images acquises. Les sources lumineuses peuvent par exemple comprendre des sources laser ou des sources blanches, ou une combinaison de sources laser et de sources blanches.

Les sources lumineuses peuvent aussi être aménagées au niveau des capteurs optiques, voire être intégrées aux capteurs optiques, de sorte à limiter les effets d'ombres induits par les sources lumineuses dans le champ de vision des capteurs correspondants. Les sources lumineuses peuvent en particulier être principalement orientées selon un axe proche de l'axe du capteur optique associé, et ainsi fournir un éclairage plus homogène de la parcelle à traiter pour le capteur optique correspondant. Alternativement, les sources lumineuses peuvent comprendre des projecteurs, étant des éléments distincts des capteurs optiques, et installés sur la rampe de pulvérisation.

De plus, les sources lumineuses 180 peuvent être configurées pour projeter au sol des motifs lumineux. L'engin agricole de pulvérisation 100 peut alors comprendre un dispositif de concentration 181 associé la source lumineuse 180 correspondante, le dispositif de concentration 181 étant configuré pour focaliser la lumière émise par la source lumineuse 180 correspondante. En effet, en focalisant la lumière provenant des sources lumineuses, il devient possible de générer des motifs lumineux.

Par ailleurs, des paramètres des sources lumineuses peuvent avantageusement être ajustables, par exemple l'intensité lumineuse des sources lumineuses peut être variable. Alors, l'unité de commande peut être configurée pour commander les sources lumineuses, par exemple pour allumer, éteindre ou pour ajuster lesdits paramètres des sources lumineuses, afin de fournir une illumination optimale de la parcelle à traiter. En particulier, l'unité de commande peut commander les sources lumineuses afin de projeter les motifs lumineux lorsque cela est approprié.

La figure 4 illustre schématiquement le procédé de calibrage 200 de l'engin agricole de pulvérisation décrit précédemment selon un autre aspect de l'invention. Le procédé de calibrage 200 selon cet aspect de l'invention comprend, pour un capteur optique 130 donné, une association 230 automatique de chaque secteur 132 du champ de vision 131 du capteur optique 130 correspondant à une buse de pulvérisation de la pluralité de buses de pulvérisation 120, ou le cas échéant, à un ensemble multi-buses. Ainsi, l'invention permet de faire le lien entre le champ de vision du capteur optique correspondant et le champ de pulvérisation des buses de pulvérisation associées, et ceci de manière automatisée.

L'association 230 automatique est mise en oeuvre par le système de commande 140 de l'engin agricole de pulvérisation. En particulier, le système de commande peut comprendre une troisième unité de commande configurée pour mettre en oeuvre au moins l'étape d'association 230 automatique du procédé de calibrage 200 selon l'invention.

La présente invention, en mettant en oeuvre une association automatique des secteurs du champ de vision des capteurs optiques aux buses de pulvérisation, offre l'avantage considérable de simplifier la mise en service de l'engin agricole de pulvérisation et de réduire la durée de l'opération de calibrage, en particulier en comparaison d'un calibrage manuel de l'engin agricole de pulvérisation.

Aussi, l'invention permet que chacun des secteurs du champ de vision du capteur optique correspondant soit précisément associé à une buse de pulvérisation correspondante. En conséquence, le procédé de calibrage selon l'invention permet une meilleure prédictibilité de l'opération de calibrage, et en conséquence améliore l'efficacité du procédé de pulvérisation localisé de l'engin agricole de pulvérisation en cours d'opération.

Pour rappel, le positionnement mécanique des différents éléments de l'engin agricole de pulvérisation, en particulier des capteurs optiques, et des buses de pulvérisation, peuvent être variables. Cette variabilité est due aux contraintes d'encombrement du système de pulvérisation et aux incertitudes de positionnement, notamment liées à la flèche et aux déviations angulaires de la rampe de pulvérisation, qui peuvent varier dans le temps. L'invention permet d'améliorer le réglage du système de commande, malgré les variations du positionnement des capteurs optiques sur la rampe de pulvérisation, et par conséquent participe à améliorer le procédé de pulvérisation localisé et automatique.

Le procédé de calibrage selon l'invention peut être répété pour l'ensemble des capteurs optiques de l'engin agricole de pulvérisation. Ceci est notamment le cas lors d'un calibrage initial de l'engin agricole de pulvérisation, par exemple en usine, avant une première mise en service de l'engin agricole de pulvérisation.

Le procédé de calibrage selon l'invention peut également être exécuté pour uniquement l'un des capteurs optiques 130, par exemple lors d'une opération de maintenance du capteur optique correspondante, ou à la suite d'une identification d'un mauvais réglage associé au capteur optique correspondant.

Alors, le procédé de calibrage 200 selon l'invention peut avantageusement comprendre l'identification automatique par le système de commande 140 d'un mauvais réglage associé à l'un des capteurs optiques 130, au préalable de l'étape d'association 230 automatique mise en oeuvre par le système de commande 140 pour le capteur optique 130 correspondant.

Par exemple, afin de vérifier si le champ de vision de l'un des capteurs optiques a dévié depuis la dernière opération de calibrage associée au capteur optique en question, il est envisageable d'aménager un élément distinctif sur l'engin agricole de pulvérisation qui soit dans le champ de vision du capteur optique correspondant. L'élément distinctif peut par exemple être un QR code. Alors, si la position de l'élément distinctif dans le champ de vision du capteur optique correspondant présente une variation trop importante, on pourra identifier un mauvais réglage associé à ce capteur optique. L'élément distinctif peut par exemple n'apparaitre dans le champ de vision du capteur optique que lorsque la rampe de pulvérisation est en position repliée. L'élément distinctif pourra alors être aménagé sur la rampe de pulvérisation. La vérification de la déviation du champ de vision du capteur optique correspondant pourra alors être réalisée lorsque la rampe de pulvérisation est en position repliée. Cela permet avantageusement de vérifier si l'association entre les secteurs du champ de vision du capteur optique correspondant et les buses de pulvérisation, est toujours correcte, et sinon relancer le procédé de calibrage pour le capteur optique correspondant.

Selon un autre exemple, le procédé de calibrage 200 selon l'invention peut comprendre la vérification du recouvrement de champs de vision 131 de deux capteurs optiques 130 consécutifs. Si ce recouvrement a évolué par rapport à la dernière opération de calibrage du capteur optique correspondant, alors le procédé de calibrage pourra être réexécuté pour le capteur optique correspondant.

Par ailleurs, il est également possible de réaliser l'association automatique des secteurs du champ de vision d'un capteur optique donné aux buses de pulvérisation, en utilisant les zones de recouvrement entre des capteurs optiques 130 adjacents. Les capteurs optiques pourront alors être réglés par rapport aux capteurs optiques adjacents.

Grâce aux zones de recouvrement, on peut par ailleurs déterminer si un capteur optique a bougé, dès lors que le système de référence 300 s'étend notamment dans lesdites zones de recouvrement entre capteurs optiques 130 adjacents, permettant de lancer une procédure de calibrage uniquement pour le capteur optique ayant bougé.

Le procédé de calibrage 200 selon l'invention sera décrit plus en détails uniquement pour l'un des capteurs optiques par souci de simplification. De manière préférée, le procédé de calibrage 200 selon l'invention peut comprendre, pour le capteur optique 130 correspondant, l'exécution des étapes successives suivantes :
- la mise en place 210 d'un système de référence 300 dans le champ de vision 131 du capteur optique 130 correspondant. Le système de référence 300 peut de préférence être aménagé au niveau du sol. De plus, le système de référence 300 présente une pluralité de motifs 310 (représentés par des traits pleins sur la figure 3), chacun des motifs 310 étant associé à l'une des buses de pulvérisation 120 et correspondant à une position déportée de la buse de pulvérisation 120 correspondante, en particulier selon la direction d'avance de l'engin agricole de pulvérisation ; un motif 310 peut être visible non seulement par le capteur optique 130 auquel il est associé, mais aussi, au moins en partie, par le ou les capteurs optiques 130 adjacents ;
- l'acquisition 220 par le capteur optique 130 correspondant d'une image dudit champ de vision 131 intégrant ladite pluralité de motifs 310.
- l'association 230 automatique mise en oeuvre par le système de commande 140 comprenant la détection 232 de ladite pluralité de motifs 310 sur ladite image, suivie de l'association 233 de chacun des secteurs 132 du champ de vision 131 à l'une des buses de pulvérisation 120 lorsque le secteur 132 correspondant intègre au moins partiellement le motif 310 associé à la buse de pulvérisation 120 correspondante.

Le procédé de calibrage 200 permet ainsi d'estimer la position du capteur optique 130 par rapport aux buses de pulvérisation 120 en déterminant la position du système de référence 300 par rapport auxdites buses de pulvérisation 120.

Le système de référence 300 peut par exemple présenter des motifs 310 de type ligne ou de type grille (comme représenté à la figure 3) ou encore des formes plus complexes, tels qu'un damier ou tout motif adapté, symétrique ou non. Ainsi, le système de référence 300 est par exemple une mire.

Dans le cas où le système de référence 300 présente un motif en forme de grille notamment, alors, chaque ligne horizontale correspond à une position déportée d'une buse de pulvérisation, ou le cas échéant d'un ensemble multi-buses, selon la direction d'avance de l'engin agricole de pulvérisation (représentée par une flèche pleine sur la figure 3).

Plus généralement, la position et l'orientation d'un motif du système de référence 300 par rapport aux buses de pulvérisation 120 permet de déterminer des positions relatives du système de référence 300, par exemple une mire, buse de pulvérisation 120 et capteur optique 130, permettant d'estimer une position locale, autrement dit relative, de la capteur optique 130 par rapport aux buses de pulvérisation et ensuite la position du motif du système de référence 300 par rapport aux buses de pulvérisation 120.

Par ailleurs, les secteurs 132 (grille avec des traits en tirets sur la figure 3) du champ de vision 131 du capteur optique 130 correspondant peuvent être décalés par rapport aux motifs 310 (grille avec des traits pleins sur la figure 3) du système de référence 300. Par exemple, les motifs 310 du système de référence 300 peuvent être des lignes longitudinales selon la direction d'avance de l'engin agricole de pulvérisation dans le prolongement des buses de pulvérisation. Alors, les secteurs associés à chaque buse de pulvérisation, ou le cas échéant à chaque ensemble multi-buses, incluent la ligne longitudinale correspondante, et peuvent donc déborder d'un côté et de l'autre de la ligne longitudinale correspondante.

Il est important de connaitre le positionnement relatif entre les buses de pulvérisations 120 et le système de référence 300. Pour cela, il est préférable d'adapter la position du système de référence 300 par rapport aux buses de pulvérisation, le système de référence 300 pouvant être repositionné plus facilement. Mais l'inverse est également envisageable, à savoir d'adapter la position des buses de pulvérisation 120 par rapport au système de référence 300 considéré comme fixé. Néanmoins, repositionner les buses de pulvérisation 120 le long de la rampe de pulvérisation 150 est généralement une opération plus fastidieuse.

Selon un mode de réalisation de l'invention, le système de référence 300 peut être un système physique, notamment une bâche. Alors, la mise en place 210 du système de référence 300 comprend la mise en place du système physique à une distance donnée de la rampe de pulvérisation 150 par un opérateur.

En particulier, la bâche peut être positionnée par rapport à la rampe de pulvérisation, par l'intermédiaire de liens mécaniques 320 (illustrés par des traits pointillés sur la figure 3), par exemple des ficelles ou des câbles, ou encore d'autre liens plus rigides.

De plus, l'association 230 automatique mise en oeuvre par le système de commande 140 pour le capteur optique 130 correspondant, peut avantageusement comprendre la détection 231 du contour de la bâche au préalable de la détection de ladite pluralité de motifs 310 du système de référence 300 sur ladite image du champ de vision 131 du capteur optique 130 correspondant. Cette étape permet d'obtenir des informations sur la perspective du champ de vision du capteur optique correspondant par rapport au sol.

En outre, selon autre mode de réalisation de l'invention, le système de référence 300 peut également être déporté par rapport au sol. Par exemple, le système de référence 300 peut être aménagé sur une surface plus proche du capteur optique, positionnée entre le capteur optique et le sol. Autrement dit, le système de référence est projeté sur la surface correspondante. Il est aussi envisageable de monter ce type de système de référence sur un support mécanique, par exemple en liaison mécanique avec la rampe de pulvérisation, de sorte à pouvoir plus facilement maîtriser le positionnement du système de référence par rapport au système de pulvérisation. De plus, utiliser un système de référence sur une surface projetée, plus proche du capteur optique et donc de plus petites dimensions, permet de réduire l'encombrement nécessaire au calibrage de l'engin agricole de pulvérisation.

Selon un autre mode de réalisation de l'invention, l'engin agricole de pulvérisation comprend des sources lumineuses 180, comme précédemment décrit. Alors, la mise en place 210 du système de référence 300 comprend en particulier la projection de la pluralité de motifs 310 par les sources lumineuses 180 sur le sol, ladite pluralité de motifs 310 correspondant alors à des motifs lumineux. Les sources lumineuses 180 peuvent par exemple être des sources lasers. De plus, les motifs lumineux peuvent former des lignes, ou encore former une grille. Utiliser des motifs lumineux permet de se passer d'un système physique, qui est généralement plus encombrant et plus long à mettre en place.

L'invention permet en résumé au système de commande de mettre en relation de façon automatisée une subdivision du champ visuel des caméras et les buses de pulvérisation. Ceci facilite considérablement la mise en service de pulvérisateurs agricoles réalisant de la pulvérisation localisée automatique. De plus, les opérations de maintenance de tels pulvérisateurs agricoles sont également facilitées.

Lorsque le système de référence est visible par deux capteurs optiques 130 différents, en particulier adjacents, on peut déterminer la position relative d'un capteur optique par rapport à l'autre. Ainsi, grâce à l'invention, on peut déterminer la position des buses de pulvérisation 130 et des capteurs optiques 120 par rapport à la rampe de pulvérisation 150 et à l'engin agricole de pulvérisation 100 dans son ensemble. Autrement dit, grâce au procédé de calibrage 200 selon l'invention, on peut déterminer la position des buses de pulvérisation 130 et des capteurs optiques 120 dans un référentiel de l'engin agricole de pulvérisation 100.

## Revendications

1. Procédé de calibrage (200) d'un engin agricole de pulvérisation (100) comprenant un système de pulvérisation (110) comprenant une rampe de pulvérisation (150), une pluralité de buses de pulvérisation (120) aménagées sur la rampe de pulvérisation (150), au moins un capteur optique (130) et un système de commande (140), chaque capteur optique (130) ayant un champ de vision (131) comprenant des secteurs (132) formant une grille, chacune des cellules de la grille de chacun des secteurs (132) étant associée à une buse de pulvérisation de la pluralité de buses de pulvérisation (120), chacune des buses de pulvérisation (120) pouvant être associée à une ou plusieurs cellule de la grille, le système de commande (140) étant configuré pour traiter des images acquises du champ de vision (131) dudit au moins un capteur optique (130) et pour commander la pluralité de buses de pulvérisation (120) en fonction desdites images, le procédé de calibrage (200) comprenant, pour un capteur optique dudit au moins un capteur optique (130), une association (230) automatique mise en oeuvre par le système de commande (140) de chaque secteur (132) du champ de vision (131) du capteur optique (130) correspondant à une buse de pulvérisation de la pluralité de buses de pulvérisation (120).

2. Procédé de calibrage (200) selon la revendication précédente, comprenant, pour chaque capteur optique dudit au moins un capteur optique (130), l'exécution des étapes successives suivantes :
- la mise en place (210) d'un système de référence (300) au sol dans le champ de vision (131) du capteur optique (130) correspondant, le système de référence (300) présentant une pluralité de motifs (310), chacun des motifs (310) étant associé à une buse de pulvérisation de ladite pluralité de buses de pulvérisation (120) et correspondant à une position déportée de la buse de pulvérisation (120) correspondante ;
- l'acquisition (220) par le capteur optique (130) correspondant d'une image dudit champ de vision (131) intégrant ladite pluralité de motifs (310) ;
- l'association (230) automatique mise en oeuvre par le système de commande (140) comprenant la détection (232) de ladite pluralité de motifs (310) sur ladite image, suivie de l'association (233) de chacun des secteurs (132) du champ de vision (131) à une buse de pulvérisation de ladite pluralité de buses de pulvérisation (120) lorsque le secteur (132) correspondant intègre au moins partiellement le motif (310) associé à la buse de pulvérisation (120) correspondante.

3. Procédé de calibrage (200) selon l'une quelconque des revendications précédentes combinée à la revendication 2, le système de référence (300) étant un système physique, notamment une bâche, **caractérisé en ce que** la mise en place (210) du système de référence (300) comprend la mise en place du système physique à une distance donnée de la rampe de pulvérisation (150) par un opérateur.

4. Procédé de calibrage (200) selon la revendication précédente, le système physique étant une bâche, **caractérisé en ce que** l'association (230) automatique mise en oeuvre par le système de commande (140) pour le capteur optique (130) correspondant, comprend la détection (231) du contour de la bâche au préalable de la détection de ladite pluralité de motifs (310) du système de référence (300) sur ladite image du champ de vision (131) du capteur optique (130) correspondant.

5. Procédé de calibrage (200) selon la revendication 2, l'engin agricole de pulvérisation (100) comprenant au moins une source lumineuse (180), **caractérisé en ce que** la mise en place (210) du système de référence (300) comprend la projection de la pluralité de motifs (310) par ladite au moins une source lumineuse (180) sur le sol, ladite pluralité de motifs (310) correspondant à des motifs lumineux.

6. Procédé de calibrage (200) selon l'une quelconque des revendications précédentes, exécuté pour chacun des capteurs optiques d'une pluralité de capteurs optiques (130).

7. Procédé de calibrage (200) selon l'une quelconques des revendications 1 à 5, exécuté pour uniquement un capteur optique de la pluralité de capteurs optiques (130), notamment à la suite d'une identification d'un mauvais réglage associé au capteur optique (130) correspondant.

8. Procédé de calibrage (200) selon l'une quelconque des revendications précédentes, comprenant l'identification automatique par le système de commande (140) d'un mauvais réglage associé à un capteur optique de la pluralité de capteurs optiques (130), au préalable de l'association (230) automatique mise en oeuvre par le système de commande (140) pour le capteur optique (130) correspondant.

9. Procédé de calibrage (200) selon l'une quelconque des revendications précédentes, comprenant la vérification du recouvrement de champs de vision (131) de deux capteurs optiques consécutifs de la pluralité de capteurs optiques (130), au préalable de l'association (230) automatique mise en oeuvre par le système de commande (140) pour le capteur optique (130) correspondant.

10. Procédé de calibrage (200) selon la revendication précédente, dans lequel un motif associé à une buse de pulvérisation (130) s'étend au moins en partie dans le champ de vision (131) d'au moins deux capteurs optiques (130) adjacents.

11. Engin agricole de pulvérisation (100) comprenant un système de pulvérisation (110) comprenant une rampe de pulvérisation (150), une pluralité de buses de pulvérisation (120) aménagées sur la rampe de pulvérisation (150), au moins un capteur optique (130), et un système de commande (140), chaque capteur optique dudit au moins un capteur optique (130) ayant un champ de vision (131) comprenant des secteurs (132) formant une grille, chacune des cellules de la grille de chacun des secteurs (132) étant associé à une buse de pulvérisation de la pluralité de buses de pulvérisation (120), chacune des buses de pulvérisation (120) pouvant être associée à une ou plusieurs cellule de la grille, le système de commande (140) étant configuré pour traiter des images acquises du champ de vision (131) dudit au moins un capteur optique (130) et pour commander la pluralité de buses de pulvérisation (120) en fonction desdites images, le système de commande (140) étant configuré pour réaliser, pour un capteur optique dudit au moins un capteur optique (130), une association (230) automatique entre chaque secteur (132) du champ de vision (131) du capteur optique (130) correspondant et une buse de pulvérisation de la pluralité de buses de pulvérisation (120).

12. Engin agricole de pulvérisation (100) selon la revendication précédente, comprenant au moins une source lumineuse (180) configurée pour projeter au sol des motifs lumineux.

13. Engin agricole de pulvérisation (100) selon la revendication précédente, ladite au moins une source lumineuse (180) comprenant un dispositif de concentration (181) configuré pour focaliser la lumière émise par la source lumineuse (180).
